(19) Europäisches Patentamt
European Patent Office
Office européen des brevets

(11) **EP 1 843 606 B1**

(12) **EUROPEAN PATENT SPECIFICATION**

(45) Date of publication and mention
of the grant of the patent:
**16.11.2011 Bulletin 2011/46**

(51) Int Cl.:
***H04W 4/10*** *(2009.01)*

(21) Application number: **04802581.1**

(22) Date of filing: **29.12.2004**

(86) International application number:
**PCT/CN2004/001569**

(87) International publication number:
**WO 2006/069483 (06.07.2006 Gazette 2006/27)**

(54) **A METHOD OF TRANSMITTING REVERSE SIGNALING IN CDMA CLUSTER COMMUNICATION SYSTEM**

VERFAHREN ZUR ÜBERTRAGUNG VON RÜCKWÄRTS-SIGNALISIERUNG IN EINEM CDMA-CLUSTER-KOMMUNIKATIONSSYSTEM

PROCEDE DE TRANSMISSION DE SIGNALISATION INVERSE DANS UN SYSTEME CDMA DE COMMUNICATION DE GROUPE

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**10.10.2007 Bulletin 2007/41**

(73) Proprietor: **ZTE Corporation**
**518057 Shenzhen City,**
**Guangdong Province (CN)**

(72) Inventors:
• **FANG, Huiying**
**Shenzhen,**
**Guangdong 518057 (CN)**
• **LIU, Xuemin**
**Shenzhen,**
**Guangdong 518057 (CN)**
• **ZHANG, Wanshuai**
**Shenzhen,**
**Guangdong 518057 (CN)**
• **YANG, Jiaan**
**Shenzhen,**
**Guangdong 518057 (CN)**

(74) Representative: **Gray, John James**
**Murgitroyd & Company**
**Scotland House**
**165-169 Scotland Street**
**Glasgow G5 8PL (GB)**

(56) References cited:
EP-A- 1 168 873        CN-A- 1 496 042
CN-A- 1 516 979        CN-A- 1 549 485
US-A1- 2003 016 632    US-A1- 2004 042 438
US-A1- 2004 146 019

**Description**

**Technical Field**

The present invention relates to a method for transmitting reverse signaling in CDMA trunking communication system, more specifically, to a method by which all the non-speaking users in a same group of a sector transmit the reverse traffic signaling through an established shared reverse channel in CDMA trunking mobile communication system. The method belongs to the communication technical field.

**Technical Background**

Trunking communication system is a specialized mobile communication system in which multi-users share a group of wireless channels and use the channels dynamically. It is mainly applied in departments having high requirement on the functions of commanding and dispatching, such as enterprises, public security, police and armies.
The current trunking communication strategy is: when there is only one user speaking in a group, the forward sending user data in the group is the same, namely, users in the group share the forward channel in the same cell. When users in a group want to call or speak, they only need to press the PTT (Push To Talk) button to communicate with other users in the same group, whereas users (including the non-speaking users) in the group in the same cell establish their own reverse channels respectively for transmitting signaling message.
The above-mentioned trunking communication system which only shares the forward traffic channel can usually satisfy the group calling traffic for the limited number of users in a group of a cell. For dispatch systems such as public security, fire fighting, large-scale assembly and military dispatch, there are a large number of users gathering in a certain district (tens of thousands of users of a group are gathering in a single cell), but these kinds of dispatch systems with a large population in a group gathering in a small cell are only used for few members with high priority to transmit command message to all the other members in the group, whereas other non-speaking users in the group can only send short signaling in the reverse channel, such as the application for speaking right, and the number of such users needing to send short signaling like the application for speaking right is usually small. Therefore, according to the conventional method, there will be undoubtedly a lot wastes of air channel resource and physical resource if respective reserve channels for tens of thousands of users in a group of a same cell are established to meet the demands of the group calling traffic with unlimited users in the group (it is also referred as broadcast group calling traffic). That is to say, tens of thousands of users in a group of the same sector can not establish their respective reverse channels due to the restriction of the reverse resource.
To solve the above problem of restriction of the reverse resource, the strategy that all the non-speaking users share one same reverse channel can be applied. However, when there are several non-speaking users in a group of a same sector using the shared reverse channel to transmit reverse signaling such as application for speaking right, it is possible that the signaling transmissions by several non-speaking users happen at the same time, leading to signaling collision and failure of signaling transmission.
To sum up, how to enable the non-speaking users transmit the reverse signaling by sharing a reverse channel in CDMA trunking communication system is an important issue for meeting the communication requirement of large-scale trunking communication system.
US 2003/0016632A1 discloses a method of providing push-to-talk and push-to-conference functionality in a CDMA system. Participants, in one embodiment, may be divided into active and inactive participants with active participants assigned a private uplink/downlink channel pair by the communication system. Inactive participants may be assigned a public downlink channel. In one embodiment, silent active participants of a conference or talk session are timed out and the private uplink/downlink: channel pair previously assigned to such individuals are released for use elsewhere in the network or by other members of the conference. In a push-to-talk embodiment one private uplink/downlink channel pair may at any given time be passed between the presently active members of the group.
EP 1163873A2 discloses an adaptive channel access scheme allows for statistics that are collected to be used to group radio users into subgroups according to the desired statistic. The subgroups then utilize channels, separated by time or frequency, to access the communication system. The sub-grouping of the radio users is designed to help minimize the chances of channel-access collisions from occurring.

**Summary of the Invention**

This invention aims to provide a method for transmitting reverse signaling in CDMA trunking communication system, so as to solve the above mentioned problem that the air channel resource and physical resource are wasted by the group calling traffic with limitless capacity in the trunking communication system, and signaling collision is easily happened when all the non-speaking users in the group share one same reverse traffic channel to send the reverse signaling, which will lead to the phenomena of transmission failure. This method makes all the non-speaking users share one common reverse channel and applies ALOHA strategy to enable all the non-speaking users in the same group in the same sector to share the reverse channel, and effectively solves the problem of signaling collision.

In order to achieve the above object, this invention applies a method for transmitting reverse signaling in a CDMA trunking communication system, which includes the following steps:

Step 1, the speaking user in the CDMA trunking system initiates a PTT group calling, the dispatch system determines whether the size of said group meets the requirement for establishing broadcast group calling, if "yes", sends broadcast group calling traffic request;

Step2, said dispatch system transmits a broadcast channel allocation message to all the non-speaking users belonging to the group in each sector of the dispatching area via the base station, said broadcast channel allocation message includes the information of setting the long code mask of the reverse traffic channel of all the non-speaking users to be the same so as to make all the non-speaking users in the same group of each sector share a same reverse traffic channel;

Step 3, after receiving said broadcast channel allocation message, the non-speaking users in idle state in said sectors turn into active state and switch off their reverse transmitting power;

Step 4, when said non-speaking users need to transmit said reverse signaling in said shared reverse traffic channel, they switch on said reverse transmitting power and send said reverse signaling; said reverse transmitting power is the initial value of the reverse transmitting power, and its value is determined by open-loop power control;

Step 5, after said non-speaking users have finished transmitting said reverse signaling, they switch off said reverse transmitting power and turn on the timer to wait for a confirmation message returned from said base station within the waiting time;

Step 6, after said non-speaking users have received said confirmation message within said waiting time, they indicate the successful transmission and end the transmission of said reverse signaling; if they have not received the confirmation message, they re-transmit said reverse signaling at an increased power value and perform step 5.

Through the above steps, the long code mask of the reverse traffic channel of all the non-speaking users belonging to the PPT group of the same sector is set to be same so as to enable all the non-speaking users transmit short signaling like application for reverse speaking right of the non-speaking users belonging to the group of the same sector via a shared reverse channel, as such, no matter how many group calling users of a same group are converging in the same cell, it takes only one more reverse traffic channel resource at the base station, greatly saving the air resource and physical resource of the system. When the non-speaking users need to transmit the reverse signaling in the shared reverse traffic channel, they can transmit the reverse signaling by switching on the reverse transmitting power. In order to prevent transmission failure resulting from collision of reverse signaling, the non-speaking users switch off the reverse transmitting power after they have transmitted the reverse signaling, then switch on the timer and wait for the confirmation message for a period of time, if no confirmation message is returned, they can re-transmit the reverse signaling automatically.

Since there may be several non-speaking users using the shared reverse traffic channel to transmit the reverse signaling at the same time, signaling collision may occur even if re-transmitting the signaling after waiting for a period of time. For this reason, the present invention applies ALOHA strategy, which can be specified as follows: make the non-speaking user wait for a period of time after it has transmitted the reverse signaling, if no returned confirmation message is received, re-transmit the reverse signaling after waiting for a randomly generated time slot. Since the probability that each non-speaking user transmitting the reverse signaling generates the same time slot is very little, the moments when different non-speaking users transmit the reverse signaling can be separated by the method of waiting for time slots, as such all the non-speaking users can take turns using the shared reverse traffic channel.

In order to prevent the non-speaking user from occupying the shared reverse channel too long time when transmitting signaling, the present invention can control the process of reverse signaling transmission of the non-speaking users via presetting an maximum times of repeatedly transmitting the reverse signaling allowed in one operation, the detailed method is as follows: when said reverse signaling is re-transmitted, accumulate the transmission times, and compare the transmission times with said maximum times; if said transmission times equals to said maximum times, said non-speaking user has not received returned confirmation message within said waiting time, then indicate the transmission failure and end the transmission of said reverse signaling; if said transmission times is less than said maximum times, return to perform step 5.

It can be seen from the above technical scheme that, by setting the long code mask of the reverse traffic signal of the non-speaking users in a same group of a sector to be the same, the present invention enables the non-speaking users of the same group in all sectors share the reverse traffic channel to transmit reverse signaling of the non-speaking users, effectively solving the problem of reverse resource restriction existing in the CDMA trunking communication system supporting the broadcast group calling traffic, effectively preventing the collision of signaling transmission in the shared reverse channel, and improving the reliability of reverse signaling transmission when the CDMAtrunking communication system applies the shared reverse channel to support the broadcast group calling traffic. The CDMA trunking communication system combines the CDMA technology with specialized dispatch communication technology, and employs half-duplex communication mode, thereby achieving rapid connection and supporting the one-to-multiple group calling pattern.

In the following, the present invention will be explained in detail through preferred embodiments and the appended drawings.

**Description of the Drawings**

Figure 1 is a schematic view of the reverse channel shared by a cell in said trunking communication system according to this invention.

Figure 2 is a flow chart of the embodiment of the non-speaking user transmitting reverse signaling according to this invention.

Figure 3 is a schematic view of the process of the non-speaking user transmitting reverse signaling in the embodiment as shown in figure 2.

**Preferred Embodiment of the Invention**

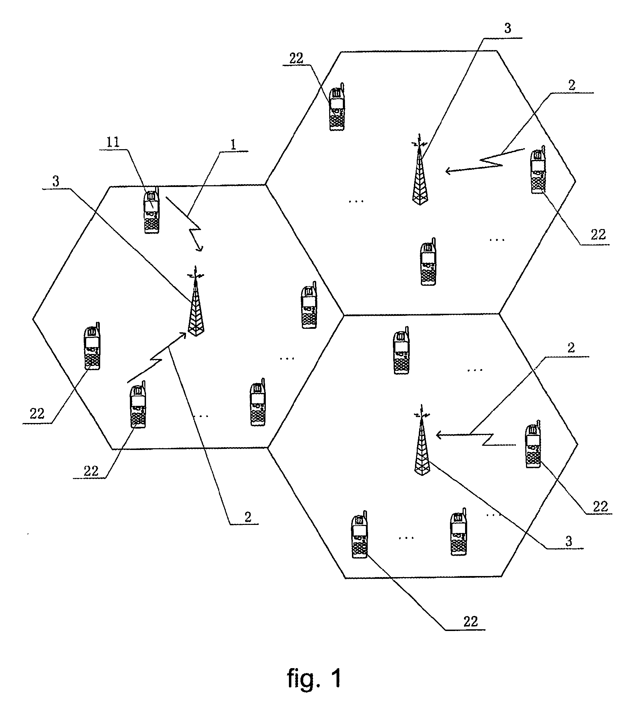

Figure 1 is the schematic view of the reverse channel shared by a cell in CDMA cellular trunking communication system provided by this invention. In the CDMA cellular trunking system, users in the group share the forward channel in the forward link to support broadcast group calling traffic. Said forward channel includes forward traffic channel and forward control channel. Said forward traffic channel includes forward primary channel and forward complementary channel, which are used to transmit the forward audio and signaling. In the reverse link, an exclusive reverse channel 1 is established for the speaking user 11 in the group to transmit the reverse audio and signaling of the speaking user, and a shared reverse traffic channel 2 is established for the non-speaking users 22 in each sector of the group to transmit short signaling of the non-speaking users, such as application for speaking right.

The method for establishing the shared reverse traffic channel is: firstly, the speaking user 11 in the CDMA trunking system initiates PTT group calling, the dispatch system determines if the size of said group meets the requirement for establishing broadcast group calling, if yes, sends the broadcast group calling traffic request; then, said dispatch system transmits the broadcast channel allocation message to all the non-speaking users 22 in each sector of the group in the dispatching area via the base station 3. In the operation of transmitting the broadcast channel allocation message, it needs to send the information of setting the long code mask of the reverse traffic channel of all the non-speaking users 22 to be the same.

After the broadcast channel allocation message has been transmitted, the non-speaking users 22 in idle state in the sector receive said broadcast channel allocation message, and all the non-speaking users 22 are made to share a same reverse traffic channel 2 through the message of setting the long code mask to be the same. All the non-speaking users 22 turn their state from Idle to Active, and switch off the reverse transmitting power.

When the non-speaking users 22 need to transmit reverse signaling through the shared reverse traffic channel 2, they may switch on the reverse transmitting power (the reverse transmitting power herein can be defined as the initial value of the reverse transmitting power, and its value is determined by open-loop power control), and switch off the reverse transmitting power after finishing the transmission of reverse signaling, then turn on the timer to wait for the confirmation message returned from the base station within a certain period of time, if the confirmation message is received during the waiting time, indicate the successful transmission and end the transmission of reverse signaling; if no confirmation message is received, re-transmit the reverse signaling and continue to wait.

The waiting time of the non-speaking users 22 can be a default value or determined by information of waiting time parameters in the received broadcast channel allocation message.

The broadcast channel allocation message transmitted by the base station 3 may also include information of the maximum times of transmission to the non-speaking users 22. The maximum times is the times that the non-speaking users 22 are allowed to re-transmit the signaling.

The broadcast channel allocation message may also include transmitting information of a predetermined value of power increasing step to the non-speaking users 22. The predetermined value of power increasing step is used to, together with the initial value of transmission power and the transmission times, calculate the new reverse transmission power when the non-speaking users 22 re-transmit the signaling.

In addition, since it is possible that several non-speaking users are using the shared reverse traffic channel to transmit the reverse signaling at the same moment, signaling collision may occur even if transmitting the signaling after a period of time. Therefore, ALOHA strategy can be employed: if after the non-speaking users have transmitted the reverse signaling and have waited for a period of time, no returned confirmation message is received, then the non-speaking users calculate the maximum delay time slot for re-transmitting the reverse signaling through the priority parameters stored in the terminal, and generate randomly a time slot with its length between 0 and the length of the maximum delay time slot, and the non-speaking users 22 re-transmit the reverse signaling after waiting for this time slot. Since the probability that each non-speaking users 22 transmitting the reverse signaling generates the same time slot is very little, the time points when different non-speaking users transmit the reverse signaling can be separated by the method of waiting for time slots so as to enable all the non-speaking users time-share the reverse traffic channel.

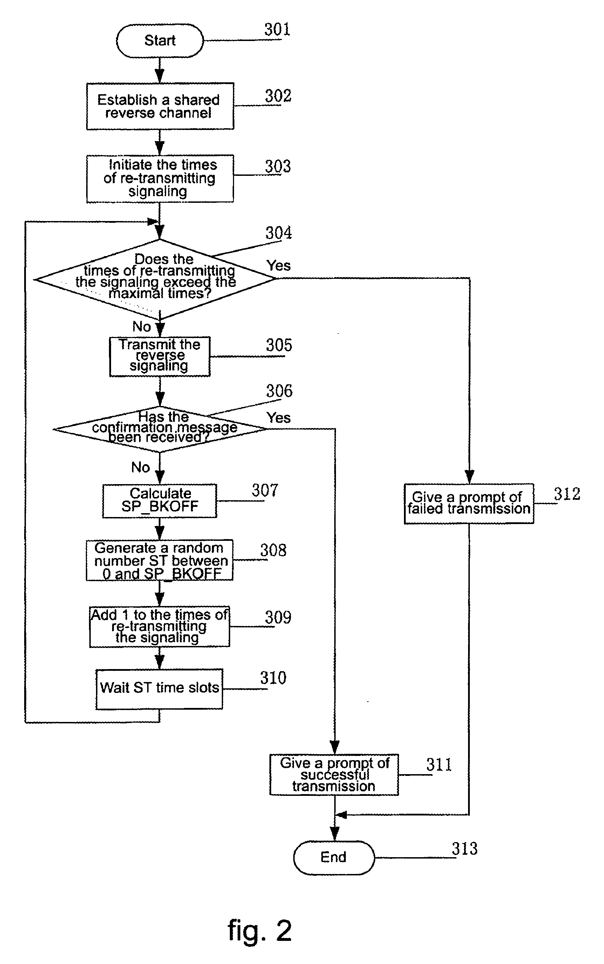

The following is the specific procedure of a preferred embodiment where the method offered in the present invention is applied to establish a shared reverse traffic channel and transmit reverse signaling by using the shared reverse traffic channel, please refer to the procedure as shown in Figure 2.

In step 301, CDMA cellular trunking communication initiates the group calling to establish broadcast group calling traffic.

In step 302, after the broadcast group calling channel allocation message is transmitted by the base station, a reverse traffic channel will be established so as to turn the non-speaking users in idle state to active state and switch off the reverse channel transmitting power.

In step 303, the initialized times of re-transmitting reverse signaling for the non-speaking users is 0.

In step 304, when certain non-speaking user needs to send reverse signaling through the shared reverse traffic channel, it is to determine whether the transmission times that the current non-speaking user transmits the same reverse signaling exceeds the maximum times ($N_{max}$), if yes, perform step 312, otherwise, perform step 305.

In step 305, the non-speaking user switches on the reverse transmission power $Psignal$ to transmit the reverse signaling, and switches off the reverse transmitting power after it has completed transmitting the reverse signaling. The above transmitting power $Psignal$ is the transmission power of the reverse pilot channel (reverse transmission power). The adjustment of the transmission power of the reverse primary channel based on the transmission power of the reverse pilot specifically is:

$$P_{Signal} = P_{outloop\_PC} + n \times P_{up\_Step}$$

wherein, $P_{outloop\_PC}$ is the initial value of the reverse transmission power determined by the open-loop power control of the user, $P_{up\_step}$ is the predetermined value of power increasing step of re-transmitting the reverse signaling, and n is the times of the reverse signaling transmission. When the non-speaking user transmits the reverse signaling for the first time, then set n=0. At this time, $P_{signal} = P_{outloop\_PC}$, i.e. the initial value of the reverse transmission power.

In step 306, the non-speaking user switches on the timer, and waits for the confirmation message returned from the base station within a period of waiting time. If the non-speaking user receives the confirmation message from the base station during the waiting time, turn to step 311; otherwise, turn to step 307.

In step 307, the non-speaking user calculates the maximum delay time slot SP_BKOFF of re-transmitting the reverse signaling according to the pre-determined priority parameters,

$$SP\_BKOFF = P_{max} - P + 1, \quad P = 0,1,...,P_{max}$$

Wherein, the $Pmax$ is the highest priority of all the users in the group, P is the priority of the current non-speaking user.

In step 308, the non-speaking user randomly generates an integer number ST within the range from 0 to the maximum delay time slot SP_BKOFF.

In step 309, the number of times for transmitting the reverse signaling is added by 1.

In step 310, the non-speaking user performs step 304 after waiting for the time slot ST. In step 311, the non-speaking user transmits a prompt of successful transmission to indicate that the reverse signaling has been transmitted successfully.

In step 312, the non-speaking user transmits a prompt of failed transmission to indicate that the reverse signaling transmission has been failed.

In step 313, the non-speaking user ends the transmission of the reverse signaling.

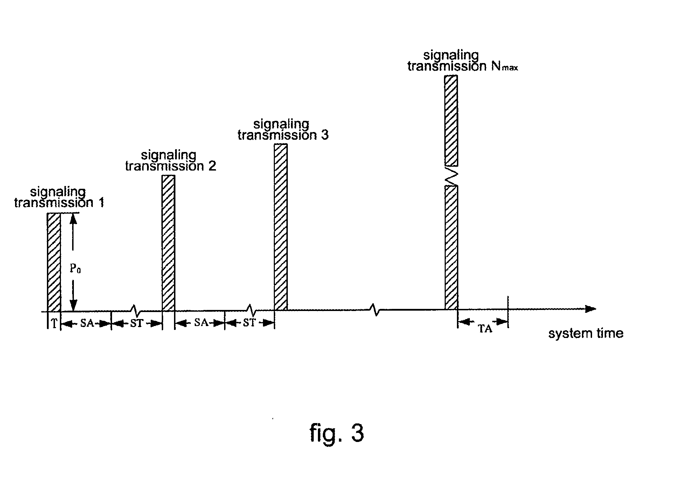

In the embodiment, the strategy of transmitting the reverse signaling in the shared reverse traffic channel by the non-speaking users is illustrated in Figure 3.

During the establishment of the shared reverse traffic channel, the channel is divided into the time slots T with constant length, the time slot T consists of prefix frame (which can be one frame) and reverse signaling message frame (which can be 3-4 frames). When the non-speaking user needs to transmit the reverse signaling in the shared reverse traffic channel (such as the non-speaking user presses the PTT button to transmit an application signaling for speaking right), the procedure shown in the Figure is applied.

First, when transmitting the reverse signaling, the non-speaking users switch on the reverse transmitting power, transmit the reverse signaling with the initial transmitting power value $P_0$ determined by the open-loop power control, and switch on the timer (the waiting time SA) to wait for the confirmation message returned from the base station. If the non-speaking user receives the confirmation message within SA, it indicates that the reverse signaling has been successfully transmitted, and then the non-speaking user transmits a prompt of successful transmission. If the non-speaking user does not receive the confirmation message returned from the base station during the SA, the non-speaking user re-switches on the transmission power after suspending ST time slots and re-transmits the signaling with the new transmission power $P_{Nmax-1}$. The new transmitting power $P_{Nmax-1}$ for re-transmitting the signaling equals to the sum of adding the initial transmitting power P0 determined by the open-loop power control with the increased part of the power, said increased part of the power is determined by the predetermined value of the power increasing step size and the transmission times.

$$\text{The new transmission power} = \text{the initial value of the reverse transmission power} + \text{the increasing part of the power;}$$

$$\text{The increasing part of the power} = \text{the transmission times} \times \text{the predetermined value of the power increasing step size.}$$

When the accumulative times of transmitting the reverse signaling reaches Nmax, if the non-speaking user still does not receive the confirmation message from the base station during the SA, the non-speaking user transmits a prompt of failed transmission.

Finally, it needs to point out that the above described embodiments are only for illustrating the technical scheme of this invention, but by no means are limitation to this invention.

## Claims

1. A method for transmitting reverse signaling in a CDMA trunking communication system, comprising the following steps of:

    Step 1, initiating a PTT group calling in the CDMA trunking system by a speaking user, determining whether the size of said group meets the requirement for establishing broadcast group calling by a dispatch system, if "yes", sending broadcast group calling traffic request;
    Step2, transmitting a broadcast channel allocation message to all non-speaking users belonging to the group in each sector within the dispatching area via a base station by said dispatch system, said broadcast channel allocation message including the information of setting long code mask of reverse traffic channel of all the non-speaking users to be the same so as to make all the non-speaking users in the same group of each sector share the same reverse traffic channel;
    Step 3, turning the non-speaking users that are in idle state in said sector into active state and switching off their reverse transmitting power after they receiving said broadcast channel allocation message;
    Step 4, said non-speaking user switching on said reverse transmitting power and sending said reverse signaling when they needing to transmit reverse signaling in said shared reverse traffic channel; said reverse transmitting power being the initial value of the reverse transmitting power, and its value being determined by open-loop power control;
    Step 5, after transmitting said reverse signaling, said non-speaking user switching off said reverse transmitting power and turning on a timer, waiting for a confirmation message returned from said base station within waiting time; and
    Step 6, after receiving said confirmation message in said waiting time, said non-speaking user indicating the successful transmission and ending the transmission of said reverse signaling; if no said confirmation message having been received, re-transmitting said reverse signaling at an increased power value and performing step 5.

**2.** The method for transmitting reverse signaling in a CDMA trunking communication system of claim 1, wherein, transmitting the broadcast channel allocation message to all the non-speaking users belonging to the group in each sector within the dispatching area in said step 2 includes transmitting information of waiting time parameters to said non-speaking user, said information of waiting time parameters is used to set the time required for said non-speaking user waiting for said confirmation message after transmitting the reverse signaling;

**3.** The method for transmitting reverse signaling in a CDMA trunking communication system of claim 1, wherein transmitting the broadcast channel allocation message to all the non-speaking users belonging to the group in each sector within the dispatching area in said step 2 includes sending the information of maximum times of transmission to said non-speaking users; said maximum times refers to the maximum times allowed for the non-speaking uses to repeatedly transmit said reverse signaling;
In said step 6, when the non-speaking user re-transmit said reverse signaling, the times of transmission will be accumulated and compared with said maximum times; when said transmission times is equal with said maximum times, said non-speaking user has not received the returned confirmation message within said waiting time, then said non-speaking user indicates the transmission failure and end the transmission of said reverse signaling; when said transmission times is less than said maximum times, return to step 5.

**4.** The method for transmitting reverse signaling in a CDMA trunking communication system of claim 1, 2 or 3, wherein, in said step 6, when the non-speaking user has not received the returned confirmation message within the waiting time, perform the following steps of:

Step 61, calculating the maximum delay time slot for re-transmitting the reverse signaling by said non-speaking user through priority parameters stored in terminal;
Step 62, generating randomly an interval time slot with its length between 0 and the length of the maximum delay time slot by said non-speaking user;
Step 63, after waiting for the interval time slot, said non-speaking user switching on said reverse transmitting power and re-transmitting the reverse signaling, then returning to step 5.

**5.** The method for transmitting reverse signaling in a CDMA trunking communication system of claim 4, wherein, transmitting the broadcast channel allocation message to all the non-speaking users belonging to the group in each sector within the dispatching area in said step 2 further includes transmitting information of predetermined value of increasing step of the transmitting power to said non-speaking user;
In said step 63, when re-transmitting said reverse signaling, the non-speaking user calculates and sets a new reverse transmitting power according to said predetermined value of increasing step of the transmitting power, said initial value of reverse transmitting power and said transmission times, then re-transmits the reverse signaling;
Said new reverse transmitting power equals to the sum of said initial value of the reverse transmitting power and the increase of the power; said increase of the power equals to said transmission times multiplying with said predetermined value of the power increasing step.

**Patentansprüche**

**1.** Ein Verfahren zum Übertragen von Rückwärtssignalisierung in einem CDMA-Bündelfunk-Kommunikationssystem, das die folgenden Schritte beinhaltet:

Schritt 1, Initiierten eines PTT-Gruppenanrufs in dem CDMA-Bündelfunksystem durch einen sprechenden Benutzer, Bestimmen, ob die Größe der Gruppe der Anforderung zum Einrichten eines Rundrufgruppenanrufs durch ein Absendesystem entspricht, falls "ja", Senden einer Rundrufgruppenanruf-Verkehrsanfrage;
Schritt 2, Übertragen einer Rundrufkanalzuteilungsnachricht an alle nicht sprechenden Benutzer, die zu der Gruppe in jedem Sektor innerhalb des Absendebereichs gehören, über eine Basisstation durch das Absendesystem, wobei die Rundrufkanalzuteilungsnachricht die Informationen zum gleichen Einstellen einer Long-Code-Maske des Rückwärtsverkehrkanals aller nicht sprechenden Benutzer umfasst, um zu bewirken, dass alle nicht sprechenden Benutzer in derselben Gruppe jedes Sektors denselben Rückwärtsverkehrkanal teilen;
Schritt 3, Umwandeln der nicht sprechenden Benutzer in dem Sektor, die in einem Ruhezustand sind, in einen aktiven Zustand und Abschalten ihrer Rückwärtsübertragungsleistung, nachdem sie die Rundrufkanalzuteilungsnachricht empfangen haben;
Schritt 4, Einschalten der Rückwärtsübertragungsleistung und Senden der Rückwärtssignalisierung durch den nicht sprechenden Benutzer, wenn sie Rückwärtssignalisierung in dem geteilten Rückwärtsverkehrkanal übertragen müssen; wobei die Rückwärtsübertragungsleistung der anfängliche Wert der Rückwärtsübertragungsleistung ist und ihr Wert durch eine rückführungslose Leistungssteuerung bestimmt wird;

Schritt 5, nach dem Übertragen der Rückwärtssignalisierung, Ausschalten der Rückwärtsübertragungsleistung und Anschalten eines Zeitgebers durch den nicht sprechenden Benutzer, Warten auf eine Bestätigungsnachricht, die von der Basisstation innerhalb einer Wartezeit zurückgesendet wird; und

Schritt 6, nach dem Empfangen der Bestätigungsnachricht in der Wartezeit, Angeben der erfolgreichen Übertragung und Beenden der Übertragung der Rückwärtssignalisierung durch den nicht sprechenden Benutzer; wenn keine Bestätigungsnachricht empfangen wurde, erneutes Übertragen der Rückwärtssignalisierung mit einem erhöhten Leistungswert und Durchführen von Schritt 5.

2. Verfahren zum Übertragen von Rückwärtssignalisierung in einem CDMA-Bündelfunk-Kommunikationssystem gemäß Anspruch 1, wobei das Übertragen der Rundrufkanalzuteilungsnachricht an alle nicht sprechenden Benutzer, die zu der Gruppe in jedem Sektor innerhalb des Absendebereichs gehören, in Schritt 2 das Übertragen von Informationen von Wartezeitparametern an den nicht sprechenden Benutzer umfasst, wobei die Informationen der Wartezeitparameter verwendet werden, um die Zeit einzustellen, die für den nicht sprechenden Benutzer, der auf die Bestätigungsnachricht wartet, nach dem Übertragen der Rückwärtssignalisierung erforderlich ist.

3. Verfahren zum Übertragen von Rückwärtssignalisierung in einem CDMA-Bündelfunk-Kommunikationssystem gemäß Anspruch 1, wobei das Übertragen der Rundrufkanalzuteilungsnachricht an alle nicht sprechenden Benutzer, die zu der Gruppe in jedem Sektor innerhalb des Absendebereichs gehören, in Schritt 2 das Senden der Informationen der maximalen Übertragungsmale an die nicht sprechenden Benutzer umfasst; wobei die maximalen Male sich auf die maximalen Male beziehen, die den nicht sprechenden Benutzern zum wiederholten Übertragen der Rückwärtssignalisierung gestattet werden;

in Schritt 6, wenn der nicht sprechende Benutzer die Rückwärtssignalisierung erneut überträgt, werden die Übertragungsmale summiert und mit den maximalen Malen verglichen; wenn die Übertragungsmale gleich den maximalen Malen sind, der nicht sprechende Benutzer die zurückgesendete Bestätigungsnachricht nicht innerhalb der Wartezeit empfangen hat, dann gibt der nicht sprechende Benutzer das Übertragungsversagen und das Ende der Übertragung der Rückwärtssignalisierung an; wenn die Übertragungsmale weniger als die maximalen Male sind, zurückkehren zu Schritt 5.

4. Verfahren zum Übertragen von Rückwärtssignalisierung in einem CDMA-Bündelfunk-Kommunikationssystem gemäß Anspruch 1, 2 oder 3, wobei in Schritt 6, wenn der nicht sprechende Benutzer die zurückgesendete Bestätigungsnachricht nicht innerhalb der Wartezeit empfangen hat, die folgenden Schritte durchgeführt werden:

Schritt 61, Berechnen des maximalen Verzögerungszeitfensters zum erneuten Übertragen der Rückwärtssignalisierung von dem nicht sprechenden Benutzer durch im Endgerät gespeicherte Prioritätsparameter;

Schritt 62, Zufalls-Erzeugen eines Intervallzeitfensters mit seiner Länge zwischen 0 und der Länge des maximalen Verzögerungszeitfensters durch den nicht sprechenden Benutzer;

Schritt 63, nach Warten auf das Intervallzeitfenster, Einschalten der Rückwärtsübertragungsleistung und erneutes Übertragen der Rückwärtssignalisierung durch den nicht sprechenden Benutzer, dann Zurückkehren zu Schritt 5.

5. Verfahren zum Übertragen von Rückwärtssignalisierung in einem CDMA-Bündelfunk-Kommunikationssystem gemäß Anspruch 4, wobei das Übertragen der Rundrufkanalzuteilungsnachricht an alle nicht sprechenden Benutzer, die zu der Gruppe in jedem Sektor innerhalb des Absendebereichs gehören, in Schritt 2 ferner das Übertragen von Informationen zu einem vorbestimmten Wert des Erhöhungsschrittes der Übertragungsleistung an den nicht sprechenden Benutzer umfasst;

in Schritt 63, beim erneuten Übertragen der Rückwärtssignalisierung, berechnet der nicht sprechende Benutzer eine neue Rückwärtsübertragungsleistung gemäß dem vorbestimmten Wert des Erhöhungsschritts der Übertragungsleistung, dem anfänglichen Wert der Rückwärtsübertragungsleistung und den Übertragungsmalen und stellt sie ein, dann überträgt er erneut die Rückwärtssignalisierung;

die neue Rückwärtsübertragungsleistung ist gleich der Summe des anfänglichen Wertes der Rückwärtsübertragungsleistung und der Erhöhung der Leistung; die Erhöhung der Leistung ist gleich den Übertragungsmalen, die mit dem vorbestimmten Wert des Leistungserhöhungsschritts multipliziert werden.

**Revendications**

1. Un procédé de transmission de signalisation de retour dans un système de communication interurbain ARMC comprenant les étapes suivantes :

   Étape 1 : initier un appel de groupe PTT dans le système interurbain ARMC par un utilisateur qui parle, déterminer si la taille dudit groupe répond à l'exigence d'établissement d'un appel de groupe de diffusion par un système de répartition et, dans l'affirmative, envoyer une demande de trafic d'appel de groupe de diffusion ;
   Étape 2 : transmettre un message d'allocation de canal de diffusion à tous les utilisateurs qui ne parlent pas appartenant au groupe dans chaque secteur au sein de la zone de répartition via une station de base par ledit système de répartition, ledit message d'allocation de canal de diffusion comportant les informations définissant un masque unique de code long de canal de trafic de retour de tous les utilisateurs qui ne parlent pas afin que tous les utilisateurs du même groupe de chaque secteur qui ne parlent pas partagent le même canal de trafic de retour ;
   Étape 3 : basculer sur un état actif les utilisateurs qui ne parlent pas et qui sont en état d'attente dans ledit secteur et couper leur puissance de transmission de retour une fois qu'ils ont reçu ledit message d'allocation de canal de diffusion ;
   Étape 4 : lesdits utilisateurs qui ne parlent pas activent ladite puissance de transmission de retour et envoient ladite signalisation de retour lorsqu'ils ont besoin de transmettre une signalisation de retour dans ledit canal de trafic de retour partagé, ladite puissance de transmission de retour étant la valeur initiale de la puissance de transmission de retour et sa valeur étant déterminée par une commande de puissance en boucle ouverte ;
   Étape 5 : après transmission de ladite signalisation de retour, ledit utilisateur qui ne parle pas coupe ladite puissance de transmission de retour et active une minuterie en attente d'un message de confirmation renvoyé par ladite station de base dans le délai d'attente ; et
   Étape 6 : après réception du dit message de confirmation dans ledit délai d'attente, ledit utilisateur qui ne parle pas indique la réussite de la transmission et met fin à la transmission de ladite signalisation de retour ; en cas de non-réception du dit message de confirmation, retransmettre ladite signalisation de retour à une valeur de puissance accrue et exécuter l'étape 5.

2. Le procédé de transmission de signalisation de retour dans un système de communication interurbain ARMC de la revendication 1 dans lequel la transmission du message d'allocation de canal de diffusion à tous les utilisateurs qui ne parlent pas appartenant au groupe dans chaque secteur au sein de la zone de répartition de l'étape 2 comporte la transmission d'informations de paramètres de délai d'attente au dit utilisateur qui ne parle pas, lesdites informations de paramètres de délai d'attente étant utilisées pour définir le temps pendant lequel ledit utilisateur qui ne parle pas devra attendre ledit message de confirmation après transmission de la signalisation de retour ;

3. Le procédé de transmission de signalisation de retour dans un système de communication interurbain ARMC de la revendication 1 dans lequel la transmission du message d'allocation de canal de diffusion à tous les utilisateurs qui ne parlent pas appartenant au groupe dans chaque secteur au sein de la zone de répartition de ladite étape 2 comporte l'envoi des informations des durées de transmission maximales aux dits utilisateurs qui ne parlent pas ; lesdites durées maximales se rapportant aux durées maximales pendant lesquelles les utilisateurs qui ne parlent pas sont autorisés à transmettre de façon répétée ladite signalisation de retour ; À ladite étape 6, lorsque l'utilisateur qui ne parle pas retransmet ladite signalisation de retour, les durées de transmission se cumulent et sont comparées aux dites durées maximales ; lorsque lesdites durées de transmission sont égales aux dites durées maximales et que ledit utilisateur qui ne parle pas n'a pas reçu le message de confirmation renvoyé pendant ledit délai d'attente, il indique l'échec de la transmission et met fin à la transmission de ladite signalisation de retour ; lorsque lesdites durées de transmission sont inférieures aux dites durées maximales, revenir à l'étape 5.

4. Le procédé de transmission de signalisation de retour dans un système de communication interurbain ARMC de la revendication 1, 2 ou 3 dans lequel, à ladite étape 6, lorsque l'utilisateur qui ne parle pas n'a pas reçu le message de confirmation renvoyé pendant le délai d'attente, les étapes suivantes sont effectuées :

   Étape 61 : calculer le délai maximum utilisable par ledit utilisateur qui ne parle pas pour retransmettre la signalisation de retour en utilisant les paramètres de priorité stockés dans le terminal ;
   Étape 62 : générer aléatoirement un délai d'intervalle d'une longueur comprise entre 0 et la longueur du délai maximum par ledit utilisateur qui ne parle pas ;
   Étape 63 : à l'issue de l'attente du délai d'intervalle, ledit utilisateur qui ne parle pas active ladite puissance de transmission de retour et retransmet la signalisation de retour, puis revient à l'étape 5.

**5.** Le procédé de transmission de signalisation de retour dans un système de communication interurbain ARMC de la revendication 4 dans lequel la transmission du message d'allocation de canal de diffusion à tous les utilisateurs qui ne parlent pas appartenant au groupe dans chaque secteur au sein de la zone de répartition de ladite étape 2 comporte en outre la transmission des informations de la valeur prédéterminée de l'étape d'augmentation de la puissance de transmission au dit utilisateur qui ne parle pas ;

À ladite étape 63, lorsque l'utilisateur qui ne parle pas retransmet ladite signalisation de retour, il calcule et définit une nouvelle puissance de transmission de retour en fonction de ladite valeur prédéterminée de l'étape d'augmentation de la puissance de transmission, de ladite valeur initiale de la puissance de transmission de retour et des dites durées de transmission, puis retransmet la signalisation de retour ;

Ladite nouvelle puissance de transmission de retour est égale à la somme de ladite valeur initiale de la puissance de transmission de retour et de l'augmentation de puissance ; ladite augmentation de la puissance est égale au produit des dites durées de transmission par ladite valeur prédéterminée de l'étape d'augmentation de puissance.

fig. 1

fig. 2

fig. 3

**EP 1 843 606 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030016632 A1
- EP 1163873 A2